# FASCICULE DE BREVET EUROPEEN

(11) **EP 4 433 348 B1**
(45) Date de publication et mention de la délivrance du brevet: **08.10.2025**
(21) Numéro de dépôt: 22801859.4
(22) Date de dépôt: 18.10.2022
(51) Int. Cl.: B62D 25/02, B62D 25/04, B62D 25/06

(54) **MONTANT DE BAIE DE PAREBRISE RENFORCÉ**
VERSTÄRKTE WINDSCHUTZSCHEIBENRAHMENSÄULE
REINFORCED WINDSHIELD FRAME PILLAR

(30) Priorité: 19.11.2021 FR 2112290
(43) Date de publication de la demande: 25.09.2024
(73) Titulaire: Stellantis Auto SAS, 78300 Poissy (FR)
(72) Inventeur: DADI, Oussama, CASABLANCA, 20270 (MA); PERU, Marc, 92290 CHATENAY MALABRY (FR)
(74) Mandataire: BCIP
(86) Numéro de dépôt international: PCT/FR2022/051963
(87) Numéro de publication internationale: WO 2023/089260

(56) Documents cités:
- EP-A1- 3 085 605
- WO-A1-02/083466
- WO-A1-2019/038485
- FR-A1- 3 088 047
- US-B1- 9 187 135

## Description

La présente invention revendique la priorité de la demande française 2112290 déposée le 19 novembre 2021 dont le contenu (texte, dessins et revendications) est ici incorporé par référence.

L'invention concerne une caisse de véhicule comportant un pied avant renforcé, ainsi qu'un véhicule comportant une telle caisse.

Afin de réduire la consommation en carburant des véhicules et réduire les émissions de polluant tel que le gaz carbonique des véhicules, une des solutions consiste à électrifier le système de propulsion des véhicules, soit en combinant l'utilisation de moteur électrique avec une motorisation thermique, plus communément connu sous le terme de véhicule hybride, soit en utilisant une propulsion du véhicule entièrement électrique. L'électrification de la propulsion des véhicules nécessite d'embarquer des batteries de plus grande capacité, et de masse de plus en plus grande, afin d'augmenter l'autonomie du véhicule en propulsion électrique. La masse de ces véhicules électrifiés augmentent donc elle aussi de manière importante. Cette augmentation de la masse du véhicule impose un renforcement de la structure du véhicule afin de préserver la sécurité des passagers en cas de choc, notamment au niveau du montant de baie de parebrise lors de choc frontal.

Il est connu de FR3088047 de consolider les montants de baie en insérant dans chacun des montants de baie un renfort principal afin d'améliorer leur résistance lors d'un choc frontal. Ce renfort s'étend suivant une direction principale similaire à celle du montant de baie, et présente une portion supérieure s'étendant parallèlement au toit, une portion inférieure s'étendant latéralement au pare-brise du véhicule, le long du montant de baie, et une portion coudée située entre les portions inférieure et supérieure. Un élément de renfort complémentaire fixé au renfort principal s'étend le long du renfort dans la partie coudée.

L'inconvénient d'une telle solution est qu'elle est insuffisante pour éviter un pliage du montant lors d'un choc frontal lorsque la masse du véhicule est importante. De plus, lorsque le véhicule ne comporte pas de batterie destinée à la propulsion du véhicule, réduisant la masse du véhicule, d'une part ce renfort n'est pas nécessaire et d'autre part la présence d'un tel renfort augmenterait la masse du véhicule.

L'objectif de l'invention est de remédier à ces inconvénients. En particulier, un des buts de l'invention est de proposer une structure de véhicule comportant un montant de baie renforcé sans en augmenter la section dudit montant de baie.

Ce but est atteint selon l'invention, grâce à une caisse de véhicule automobile comportant un montant de baie de parebrise s'étendant le long d'une baie de parebrise depuis un pied avant jusqu'à un pavillon, une arche de pavillon s'étendant le long du pavillon depuis le montant de baie, le montant de baie et l'arche de pavillon comprenant chacun un corps creux, la caisse comportant en outre un renfort principal de montant de baie s'étendant dans le montant de baie et en partie dans l'arche de pavillon, la caisse étant remarquable en ce qu'elle comporte en outre un renfort complémentaire s'étendant le long du renfort principal dans le montant de baie et l'arche de pavillon, depuis le pied avant jusqu'au-delà d'une extrémité arrière du renfort principal située dans l'arche de pavillon, de sorte à renforcer le renfort principal et l'arche de pavillon.

Ainsi, avantageusement, le montant de baie et l'arche de pavillon est plus résistant grâce au renfort complémentaire venant renforcé le renfort principal. Un autre avantage est qu'il est possible de n'installer que le renfort principal sans le renfort complémentaire sans modifier ni les doublures avant et arrière, ni le renfort principal, ni la paroi extérieure. Il est ainsi possible d'adapter la résistance du montant de baie et de l'arche de pavillon en fonction de la masse du véhicule, et notamment en fonction de la masse des batteries installées sur le véhicule, à moindre coût.

Dans un mode de réalisation préféré de l'invention, le montant de baie comprend une paroi extérieure, disposée du côté extérieur de la caisse, et une doublure avant s'étendant le long du montant de baie, de sorte à former entre eux le corps creux dudit montant de baie, et l'arche de pavillon comprend une paroi extérieure, disposée du côté extérieur de la caisse, et une doublure arrière s'étendant sur au moins une partie du long de ladite arche de pavillon dans le prolongement de la doublure avant de sorte à former le corps creux de l'arche, , la doublure avant s'étendant en partie sur l'arche de pavillon, les deux doublures étant disposées du côté intérieur de la caisse du véhicule, le renfort principal s'étendant entre la paroi extérieure et au moins la doublure avant.

Dans un autre mode de réalisation de l'invention, le renfort principal s'étend au moins en partie en vis de la doublure arrière, et le renfort complémentaire s'étend entre le renfort principal et les doublures.

Dans un mode de réalisation préféré de l'invention, la caisse comporte un renfort arrière d'arche de pavillon, disposé dans l'arche de pavillon en prolongement du renfort principal, entre la paroi extérieure et la doublure arrière.

Ainsi l'arche de pavillon est renforcée par le renfort complémentaire et le renfort arrière.

Avantageusement, la jonction entre le renfort arrière et le renfort principal est disposé en vis-à-vis de la doublure arrière. Autrement dit, la jonction entre la doublure arrière et la doublure avant est disposée en vis-à-vis du renfort principal. Ainsi la jonction entre le renfort arrière et le renfort principal est décalée par rapport à la jonction des doublures, améliorant la résistance de l'arche de pavillon en cas de choc.

Dans un autre mode de réalisation de l'invention, la caisse comporte un pied milieu s'étendant sensiblement suivant un axe vertical dans le référentiel de la caisse, relié à l'arche de pavillon au niveau du renfort principal, de préférence sur un segment comprenant l'extrémité arrière dudit renfort principal. L'extrémité arrière du renfort principal est l'extrémité orientée vers l'arrière de la caisse.

Ainsi avantageusement, la partie de la structure du véhicule formée par l'arche de pavillon et le montant de baie, en avant du pied milieu, est renforcée par la présence du renfort complémentaire qui s'étend dans l'arche de pavillon jusqu'en arrière du pied milieu.

Dans un autre mode de réalisation de l'invention, le renfort complémentaire est fixé au renfort principal, de préférence par soudage. Par exemple, le renfort complémentaire comporte le long de l'un de ces bords latéraux disposé le long de la baie de parebrise des pattes de fixations soudées au renfort principal.

Ainsi avantageusement, lors de la fabrication de la caisse du véhicule, le renfort principal et le renfort complémentaire sont installés ensemble, déjà fixés l'un à l'autre, au niveau du montant de baie. Il n'y a donc qu'un seul ensemble composé de deux pièces fixées l'une à l'autre à manipuler.

Dans un mode de réalisation particulier de l'invention, le renfort complémentaire s'étend jusqu'en vis-à-vis du renfort arrière.

Ainsi avantageusement, l'arche de pavillon est renforcée sur une grande partie de sa longueur, et notamment au niveau de la jonction entre le renfort arrière et le renfort avant ainsi qu'au niveau de la jonction entre la doublure avant et la doublure arrière.

Dans un autre mode de réalisation de l'invention, le renfort principal est un profilé dont la section transversale comporte une partie centrale en forme de « U » et des rebords à l'extrémité libre de chacune des branches du « U » agencés de sorte à former une feuillure de fixation, par exemple avec les bords de la paroi extérieur et/ou de la doublure avant au moins le long du montant de baie, le renfort complémentaire étant disposé au moins partiellement à l'intérieur de la forme en « U » de la partie centrale.

Ainsi avantageusement, le renfort complémentaire peut être installé dans un montant de baie et une arche de pavillon de faible section comportant le renfort principal, car disposé en partie dans le volume de la partie centrale du renfort principal.

Dans un mode de réalisation préféré de l'invention, le renfort complémentaire est un profilé de section transversale en « U ».

Dans autre un mode de réalisation préféré, le renfort complémentaire est agencé de sorte que sa section en « U » soit au moins en partie à l'intérieur de la partie centrale du renfort principal, entre les branches du « U » de ladite partie centrale, au moins le long du montant de baie. En variante, le renfort complémentaire est au moins en partie à l'intérieur de la partie centrale du renfort principal aussi le long de l'arche de pavillon. De préférence les extrémités libres des branches du « U » du renfort principal et du renfort complémentaire sont orientées dans la même direction.

L'invention porte aussi sur un véhicule comportant une caisse (1) suivant l'une des revendications précédentes.

L'invention sera mieux comprise à la lecture de la description qui va suivre, donnée uniquement à titre d'exemple et faite en se référant aux dessins annexés, sur lesquels :
[Fig.1] représente une vue en perspective d'une caisse de véhicule automobile.
[Fig.2] représente une vue d'un côté latérale d'une caisse de véhicule suivant l'invention depuis l'intérieur de la caisse.
[Fig.3] est une vue de la coupe A-A du montant de baie telle qu'indiquée en figure 2.
[Fig.4] est une vue similaire à la figure 2 dans laquelle les doublures intérieures de baie de parebrise et d'arche de pavillon ne sont pas représentées.
[Fig.5] est une vue du renfort complémentaire installé sur le renfort principal.

Les dessins sont des représentations schématiques pour faciliter la compréhension de l'invention. Les composants ne sont pas forcément représentés à l'échelle. Les mêmes références correspondent aux mêmes composants d'une figure à l'autre.

L'axe X représente la direction longitudinale du véhicule, l'axe Y la direction transversale et l'axe Z la direction verticale. Les directions avant, arrière, haut, bas sont prises dans le référentiel du véhicule. Les directions longitudinale, transversale et verticale de la caisse du véhicule sont les mêmes que celui du véhicule comportant la caisse. De même, les directions avant et arrière, ainsi que les directions haut et bas de la caisse correspondent celle du véhicule.

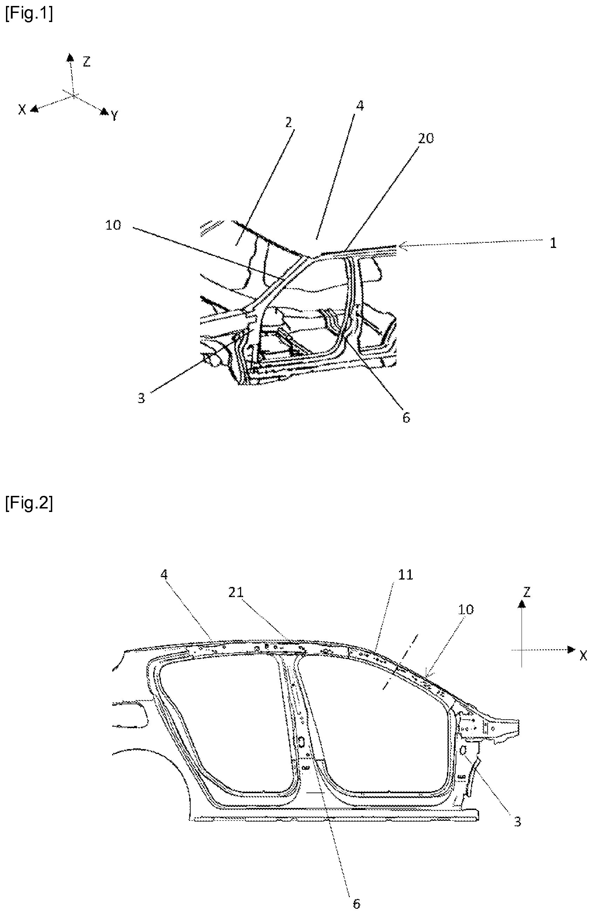

La figure 1 illustre une caisse 1 de véhicule comportant une baie de parebrise 2, destinée à recevoir un parebrise, un montant de parebrise 10 qui s'étend latéralement le long de la baie de parebrise 2 depuis un pied avant (3) jusqu'à une arche de pavillon (20). L'arche de pavillon (20) s'étend le long d'un bord latéral d'un pavillon 4. L'arche de pavillon 20 s'étend dans une direction principale sensiblement parallèle à l'axe longitudinal X, dans la continuité du montant de baie 10 qui est incliné par rapport à la direction longitudinale X. La caisse 1 comporte en outre un pied milieu 6 s'étendant sensiblement verticalement, depuis un longeron latéral jusqu'à l'arche de pavillon 20. L'espace laissé libre entre le pied milieu 6, le pied avant 3, le longeron, le montant de baie 10 et l'arche de pavillon 20 forme une entrée de porte, agencée pour recevoir une porte de fermeture. La caisse 1 comporte sur ces deux côtés latéraux la même structure. Elle comporte donc deux montants de baie 10, de chaque côté de la baie de parebrise 2, deux arches de pavillon 20 de chaque côté du pavillon et deux pieds milieu 6.

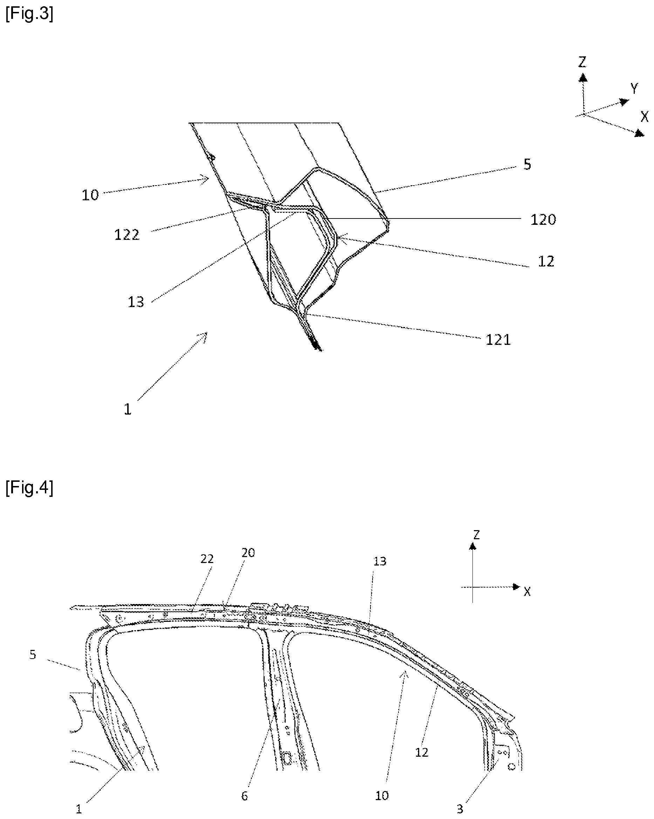

Comme illustré en figures 2 et 3, le montant de baie 10 est un corps creux obtenu par exemple par l'association d'une paroi extérieure 5 et d'une doublure avant 11 s'étendant le long du montant de baie 10. De même, l'arche de pavillon 20 est un corps creux réalisé par l'association d'une doublure arrière 21 et d'une paroi extérieure 5. La paroi extérieure 5 est par exemple une pièce de tôle emboutie formant le côté latéral de la caisse 1, depuis le pied avant jusqu'à l'arrière du flanc latéral de la caisse 1, y compris le pied milieu 6. Cette même pièce de tôle forme ainsi la paroi extérieur 5 au niveau de montant de baie 10 et de l'arche de pavillon 20, et les deux doublures (11, 21) sont disposées du côté intérieur de la caisse (1).

La doublure arrière (21) s'étend au moins le long de l'arche de pavillon (20) dans le prolongement de la doublure avant (11). La doublure avant 11 s'étend le long du montant de baie 10 et sur une partie de l'arche de pavillon 20. Un renfort principal (12) de montant de baie (10) s'étend dans ledit montant de baie (10), entre la paroi extérieure (5) et la doublure avant (11), dans au moins une partie de l'arche de pavillon 20. Un renfort complémentaire (13) s'étend lui aussi dans le montant de baie (10) et l'arche de pavillon (20), depuis le pied avant (3) jusqu'au-delà d'une extrémité arrière du renfort principal (12) située dans l'arche de pavillon (20), de sorte à renforcer le renfort principal (12) et l'arche de pavillon (20). Par exemple, le renfort complémentaire 13 s'étend jusque dans la partie de l'arche de pavillon (20) comportant la doublure arrière (21) comme illustré en figure 4. C'est-à-dire que l'extrémité arrière du renfort complémentaire 13 est en vis-à-vis de la doublure arrière 21. L'extrémité arrière du renfort principal 12 est l'extrémité orientée vers l'arrière de la caisse 1.

Dans le mode de réalisation représenté en figures 3 et 4, le renfort complémentaire (13) est disposé entre le renfort principal (12) et la doublure avant (11). C'est-à-dire qu'il est disposé du côté intérieur de la caisse par rapport au renfort principal 12. Il est aussi disposé entre ce renfort principal 12 et la doublure arrière 21.

Comme illustré en figure 4, la caisse 1 comporte un renfort arrière (22) d'arche de pavillon, disposé dans l'arche de pavillon (20) en prolongement du renfort principal (12), entre la paroi extérieure (5) et la doublure arrière (21). La jonction entre le renfort arrière (22) et le renfort principal (12) est situé en vis-à-vis de la doublure arrière (21). Le renfort principal 12 s'étend dans le montant de baie 10, depuis le pied avant 3, et se poursuit dans une partie de l'arche de pavillon 20 jusqu'au pied milieu 6. Le renfort complémentaire 13 s'étendant au-delà de l'extrémité arrière du renfort principal 12, dans l'arche de pavillon 20 vers l'arrière de la caisse jusqu'en vis-à-vis du renfort arrière (22), au-delà du pied milieu 6.

Le pied milieu (6) est relié à l'arche de pavillon (20), au niveau du renfort principal (12), par exemple au niveau du segment formant l'extrémité arrière dudit renfort principal (12). C'est-à-dire que le renfort principal 12 ne s'étend pas au-delà du pied milieu 6 vers l'arrière de la caisse 1. Le pied milieu 6 est par exemple formé par une partie du panneau extérieur 5 et un renfort de pied milieu fixé sur ladite partie du panneau extérieur 5. Le renfort de pied milieu est fixé par exemple au renfort principal 12.

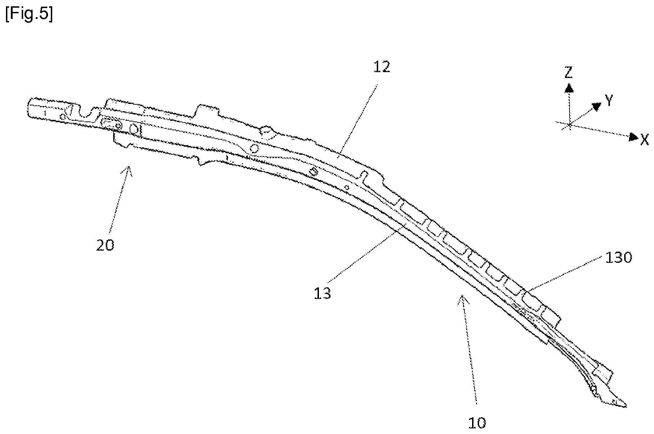

Comme illustré en figure 5, le renfort complémentaire (13) comporte le long de l'un de ces bords latéraux disposé le long de la baie de parebrise des pattes de fixations (130) soudées au renfort principal (12). Ces pattes de fixation 130 s'étendent suivant une direction approximativement transversale Y à la caisse 1, en direction de la baie de parebrise 2, et sont distantes l'une de l'autre.

Le renfort principal 12 est sous la forme d'un profilé dont la section transversale comporte une partie en creux, par exemple en forme de « U », de « V » ou encore de « Ω » de sorte à former une rainure sur sa longueur, et le renfort complémentaire 13 est disposé dans cette rainure au moins le long du montant de baie et au moins en partie le long de l'arche de pavillon. En variante, il est disposé dans cette rainure tout le long du renfort principal, la rainure s'étendant sur toute la longueur du renfort principal 12. Pour cela, le renfort complémentaire 13 est de forme complémentaire à cette rainure ou adaptée à être inséré dans cette rainure.

Par exemple, comme illustré en figure 3, le renfort complémentaire (13) est formé par un profilé de section en « U » dont l'extrémité des branches du « U » sont orientées vers l'intérieur de la caisse (1). Les pattes de fixation 130 s'étendent depuis l'extrémité libre la branche de la section en « U » située du côté de la baie de parebrise 2. C'est-à-dire que les pattes de fixation 130 s'étendent depuis la section en « U » vers la baie de parebrise 2.

En vis-à-vis de ce renfort complémentaire 13, le renfort principal (12) est sous la forme d'un profilé dont la section comporte une partie centrale (120) elle aussi en forme de « U », et des rebords (121 et 122) disposés chacun à l'extrémité libre de chacune des branches du « U ». C'est-à-dire que le renfort principal 12 comporte de part et d'autre de sa partie centrale 120 les rebords 121 et 122 s'étendant sur une partie ou sur toute sa longueur. Ces rebords 121 et 122 sont agencés de sorte à former de part et d'autre de la partie centrale 120, une feuillure de fixation avec les bords de la paroi extérieur (5) et/ou de la doublure avant (11) au moins le long du montant de baie (10). Le renfort complémentaire (13) est disposé de sorte que sa section en « U » soit au moins en partie à l'intérieur de la partie centrale (120) du renfort principal (12), entre les branches du « U » de ladite partie centrale (120), par exemple sur toute la longueur dudit renfort principal 12 depuis le pied avant 3 jusqu'au pied milieu 6, les extrémités libres de chacune des branches de chacun des « U » étant par exemple dirigées dans la même direction. Les extrémités libres des branches des « U » de chacun des renforts 12, 13 sont orientés vers l'intérieur de la caisse 1, c'est-à-dire vers la doublure avant. D'autres orientations sont envisageables.

De manière similaire, le renfort arrière 22 comporte aussi une partie centrale de section en forme de « U » dans laquelle s'insère au moins partiellement le renfort complémentaire. Cette orientation de la section du renfort principal 12 et du renfort complémentaire 13 apporte une résistance accrue vis-à-vis des efforts subit en cas de choc avant du véhicule comportant une telle caisse 1.

Le long de la baie de parebrise 2, le montant de baie 10 forme donc une feuillure de fixation dans laquelle sont pris en sandwich le rebord 121 du renfort principal 12, situé du côté de la baie de parebrise 2, et les pattes de fixation 130 du renfort complémentaire 13, entre des rebords de la paroi extérieure 5 et des rebords de la doublure avant 11. Le renfort complémentaire 12 peut être fixé par sa branche du « U » opposée à celle comportant les pattes de fixation 13, à la branche du « U » de la partie centrale 120 du renfort principal 12 lui faisant face. La fixation du renfort complémentaire 13 au renfort principal 12 est réalisée par exemple par soudage par point, laser, ou tout autre moyen de fixation connues par l'homme du métier.

En variante, l'homme du métier pourra choisir des formes différentes pour la section du renfort principal 12 et du renfort 13. Par exemple, ces sections peuvent être en forme de « V » ou encore de « W ».

La paroi extérieure 5, les doublures avant 11 et arrière 21, le renfort principal 12 et le renfort complémentaire 13 sont par exemple réalisés en tôle d'acier emboutie, fixés entre eux pas des points de soudages ou tout autre moyen connu de l'homme du métier. L'homme du métier pourra adapter la conception de ces pièces à d'autres mode de réalisation des pièces : par exemple certaine de ces pièces peuvent être des profilés, telles que des profilés en aluminium qui sont ensuite déformées.

## Revendications

1. Caisse (1) de véhicule automobile comportant un montant de baie (10) de parebrise s'étendant le long d'une baie (2) de parebrise depuis un pied avant (3) jusqu'à un pavillon (4), une arche de pavillon (20) s'étendant le long du pavillon (4) depuis le montant de baie (10), le montant de baie (10) et l'arche de pavillon (20) comprenant chacun un corps creux, la caisse (1) comportant en outre un renfort principal (12) de montant de baie (10) s'étendant dans le montant de baie (10) et en partie dans l'arche de pavillon (20), la caisse (10) étant **caractérisée en ce qu'**elle comporte en outre un renfort complémentaire (13) s'étendant le long du renfort principal (12) dans le montant de baie (10) et l'arche de pavillon (20), depuis le pied avant (3) jusqu'au-delà d'une extrémité arrière du renfort principal (12) située dans l'arche de pavillon (20), de sorte à renforcer le renfort principal (12) et l'arche de pavillon (20).

2. Caisse (1) de véhicule automobile suivant la revendication précédente, dont le montant de baie (10) comprend une paroi extérieure (5), disposée du côté extérieur de la caisse (1) et une doublure avant (11) s'étendant le long du montant de baie (10), de sorte à former entre eux le corps creux dudit montant de baie (10), l'arche de pavillon (20) comprend une paroi extérieure (5), disposée du côté extérieur de la caisse (1), et une doublure arrière (21) s'étendant sur au moins une partie du long de ladite arche de pavillon (20) dans le prolongement de la doublure avant (11) de sorte à former le corps creux de l'arche (20), la doublure avant (11) s'étendant en partie sur l'arche de pavillon (20), les deux doublures (11, 21) étant disposées du côté intérieur de la caisse (1) du véhicule, le renfort principal (12) s'étendant entre la paroi extérieure (5) et au moins la doublure avant (11, 12).

3. Caisse (1) de véhicule suivant la revendication 2, dont le renfort principal s'étend au moins en partie en vis de la doublure arrière, et le renfort complémentaire (13) s'étend entre le renfort principal (12) et les doublures (11, 21).

4. Caisse (1) de véhicule suivant la revendication 3, comportant un renfort arrière (22) d'arche de pavillon, disposé dans l'arche de pavillon (20) en prolongement du renfort principal (12), entre la paroi extérieure (4) et la doublure arrière (21).

5. Caisse (1) de véhicule suivant la revendication 4, dont la jonction entre le renfort arrière (22) et le renfort principal (12) est disposé en vis-à-vis de la doublure arrière (21).

6. Caisse (1) de véhicule suivant l'une des revendications précédentes, comportant un pied milieu (6) s'étendant sensiblement suivant un axe vertical (Z) dans le référentiel de la caisse (1) et relié à l'arche de pavillon (20) au niveau du renfort principal (12), de préférence sur un segment comprenant l'extrémité arrière du renfort principal (12).

7. Caisse (1) de véhicule suivant l'une des revendications précédentes, dont le renfort complémentaire (13) est fixé au renfort principal (12), de préférence par soudage.

8. Caisse (1) de véhicule suivant l'une des revendications précédentes, dont le renfort principal (12) est un profilé dont la section comporte une partie centrale (120) en forme de « U » et des rebords (121, 122) à l'extrémité libre de chacune des branches du « U » agencées de sorte à former une feuillure de fixation, le renfort complémentaire (13) étant disposé au moins partiellement à l'intérieur de la forme en « U » de la partie central (120).

9. Véhicule comportant une caisse (1) suivant l'une des revendications précédentes.

## Patentansprüche

1. Kraftfahrzeugkarosserie (1) mit einem sich entlang einer Windschutzscheibenbucht (2) von einem vorderen Fuß (3) zu einem Dach (4) erstreckenden Dachbogen (20), der sich entlang der Decke (4) von der Bugenbucht (10) erstreckt, wobei der Bugenpfosten (10) und der Dachbogen (20) jeweils einen Hohlkörper aufweisen, wobei die Karosserie (1) ferner eine sich erstreckende Hauptverstärkung (12) des Bugenpfostens (10) aufweist In dem Becherständer (10) und teilweise in dem Dachbogen (20) ist der Kasten (10) **dadurch gekennzeichnet, dass** er außerdem eine ergänzende Verstärkung (13) aufweist, die sich entlang der Hauptverstärkung (12) in dem Becherständer (10) und dem Dachbogen (20) vom vorderen Fuß (3) bis über ein hinteres Ende der Hauptverstärkung (12) hinaus erstreckt, das sich in dem Dachbogen (20) befindet, um die Hauptverstärkung (12) und den Dachbogen zu verstärken (20)

2. Kraftfahrzeugkarosserie (1) nach dem vorhergehenden Anspruch, bei der der Karosserieträger (10) eine Außenwand (5), die an der Außenseite des Karosserieträgers (1) angeordnet ist, und eine vordere Auskleidung (11) umfasst, die sich entlang des Karosserieträgers (10) erstreckt, um dazwischen den hohlen Körper des Karosserieträgers (10) zu bilden, der Dachbogen (20) eine Außenwand (5), die an der Außenseite des Karosserieträgers (1) angeordnet ist, und eine hintere Auskleidung (21) umfasst, die sich über mindestens einen Teil entlang des Karosserieträgers erstreckt Dachhimmel (20) in Verlängerung der vorderen Auskleidung (11) zum Hohlkörper des Bogens (20), wobei sich die vordere Auskleidung (11) teilweise über den Dachbogen (20) erstreckt, wobei die beiden Auskleidungen (11, 21) an der Innenseite des Fahrzeugaufbaus (1) angeordnet sind, wobei sich die Hauptverstärkung (12) zwischen der Außenwand (5) und mindestens der vorderen Auskleidung (11, 12) erstreckt.

3. Fahrzeugkarosserie (1) nach Anspruch 2, deren Hauptverstärkung sich zumindest teilweise gegenüber der hinteren Auskleidung erstreckt und deren Gegenverstärkung (13) sich zwischen der Hauptverstärkung (12) und den Auskleidungen (11, 21) erstreckt.

4. Fahrzeugkarosserie (1) nach Anspruch 3 mit einer hinteren Dachbogenverstärkung (22), die in der Dachbogenarke (20) in Verlängerung der Hauptverstärkung (12) zwischen der Außenwand (4) und der hinteren Auskleidung (21) angeordnet ist.

5. Fahrzeugkarosserie (1) nach Anspruch 4, bei der die Verbindung zwischen der hinteren Verstärkung (22) und der Hauptverstärkung (12) gegenüber der hinteren Auskleidung (21) angeordnet ist.

6. Wagenkasten (1) nach einem der vorhergehenden Ansprüche, mit einem Mittelfuß (6), der sich im Wesentlichen entlang einer vertikalen Achse (Z) im Bezugsrahmen des Wagenkastens (1) erstreckt und mit dem Dachbogen (20) an der Hauptverstärkung (12) verbunden ist, vorzugsweise an einem Abschnitt, der das hintere Ende der Hauptverstärkung (12) umfasst.

7. Fahrzeugkarosserie (1) nach einem der vorhergehenden Ansprüche, deren Gegenverstärkung (13) an der Hauptverstärkung (12) befestigt ist, vorzugsweise durch Schweißen.

8. Wagenkasten (1) nach einem der vorhergehenden Ansprüche, dessen Hauptverstärkung (12) ein Profil ist, dessen Querschnitt einen U-förmigen Mittelteil (120) und Flansche (121, 122) am freien Ende jedes der U-Schenkel aufweist, die so angeordnet sind, dass sie einen Befestigungsfalz bilden, wobei die Gegenverstärkung (13) zumindest teilweise innerhalb der U-Form des Mittelteils (120) angeordnet ist.

9. Fahrzeug mit einem Wagenkasten (1) nach einem der vorhergehenden Ansprüche.

## Claims

1. Body (1) for a motor vehicle comprising a windshield rack (10) extending along a windshield rack (2) from a front foot (3) to a roof (4), a roof arch (20) extending along the roof (4) from the bay post (10), the bay post (10) and the roof arch (20) each comprising a hollow body, the body (1) further comprising a main reinforcement (12) of the bay post (10) extending into the a bay post (10) and partly in the roof arch (20), wherein the body (10) further comprises a complementary reinforcement (13) extending along the main reinforcement (12) in the bay post (10) and the roof arch (20), from the front foot (3) to beyond a rear end of the main reinforcement (12) located in the roof arch (20), so as to reinforce the main reinforcement (12) and the roof arch (20)

2. motor vehicle Body (1) according to the previous claim, the bay post (10) of which comprises an outer wall (5) disposed on the outer side of the body (1) and a front lining (11) extending along the bay post (10), so as to form between them the hollow body of said bay post (10), the roof arch (20) comprises an outer wall (5) disposed on the outer side of the body (1), and a rear lining (21) extending over at least a part of the length of said arch roof liner (20) in the extension of the front lining (11) so as to form the hollow body of the arch (20), the front lining (11) extending in part over the roof arch (20), the two liners (11, 21) being arranged on the inner side of the body (1) of the vehicle, the main reinforcement (12) extending between the outer wall (5) and at least the front lining (11, 12).

3. Body (1) according to claim 2, the main reinforcement of which extends at least in part opposite the rear lining, and the complementary reinforcement (13) extends between the main reinforcement (12) and the linings (11, 21).

4. Body (1) according to claim 3, comprising a rear reinforcement (22) of a roof arch, arranged in the roof arch (20) in extension of the main reinforcement (12), between the outer wall (4) and the rear lining (21).

5. Body (1) of a vehicle according to claim 4, the junction between the rear reinforcement (22) and the main reinforcement (12) of which is arranged opposite the rear lining (21).

6. Body (1) according to one of the previous claims, comprising a middle foot (6) extending substantially along a vertical axis (Z) in the frame of reference of the body (1) and connected to the roof arch (20) on the level of the main reinforcement (12), preferably on a section comprising the rear end of the main reinforcement (12).

7. Body (1) according to one of the previous claims, the complementary reinforcement (13) of which is fixed to the main reinforcement (12), preferably by welding.

8. Body (1) according to one of the previous claims, the main reinforcement (12) of which is a section whose section comprises a U-shaped central part (120) and flanges (121, 122) at the free end of each of the branches of the U arranged so as to form a fixing rabbet, the complementary reinforcement (13) being arranged at least partially inside the U-shape of the central part (120).

9. Vehicle comprising a body (1) according to any of the previous claims.
